# EUROPÄISCHE PATENTSCHRIFT

(11) **EP 1 420 927 B1**
(45) Veröffentlichungstag und Bekanntmachung des Hinweises auf die Patenterteilung: **20.10.2004**
(21) Anmeldenummer: 01980310.5
(22) Anmeldetag: 31.08.2001
(51) Int. Cl.: B29B 7/56

(54) **WALZWERK**
ROLLING MILL SYSTEM
SYSTEME DE LAMINOIR

(43) Veröffentlichungstag der Anmeldung: 26.05.2004
(73) Patentinhaber: Albers, August, 79104 Freiburg (DE)
(72) Erfinder: Albers, August, 79104 Freiburg (DE)
(74) Vertreter: Zimmermann, Günter, Dr.
(86) Internationale Anmeldenummer: PCT/EP2001/010048
(87) Internationale Veröffentlichungsnummer: WO 2003/018277

(56) Entgegenhaltungen:
- DE-A- 3 024 552
- DE-A- 4 330 090
- DE-A- 4 334 697
- GB-A- 672 668
- US-A- 3 548 742

## Beschreibung

Die Erfindung bezieht sich auf ein Walzwerk mit den Merkmalen des Oberbegriffs des Anspruchs 1.

Ein derartiges Walzwerk ist durch die DE 4334697 A1 bekannt. Nachteiligerweise ist die Herstellung von Granulat bei diesem Walzwerk nicht optimal.

Durch die US 3548742 ist ein Walzwerk mit zwei Walzen bekannt, wobei jede Walze schraubengewindeförmige Rillen aufweist. Die Rillen sind in der Walzenmitte nicht durchgehend. Die Rillen laufen mit offenen Enden aus, wobei im Bereich der offenen Enden ein Abnahmeelement für die Abnahme des Materials vorgesehen ist. Die Schneidvorrichtung ist unterhalb des Abnahmeelementes angeordnet.

Ein weiteres Walzwerk ist durch die EP 0 231 398 bekannt. Bei dem Walzwerk handelt es sich um ein kontinuierliches Misch- und Scherwalzwerk, mit welchem pastifizierbares Material geschert und gleichzeitig mittels der Rillen transportiert wird. Über eine Streifenschneidwalze geschieht eine Materialabnahme als Streifen, welche anschließend in einer Querschneidvorrichtung zu Granulat zerschnitten werden. Die Herstellung von Granulat ist bei diesem Walzwerk recht aufwendig.

Weitere Walzwerke mit Scherkrafteinwirkung auf das Material aufgrund von auf den Mantelflächen zweier Walzen angeordneten Rillen sind durch die EP 0 148 966, EP 0 324 800, DE 43 30 090 C2, DE 43 34 697 A1 und DE-OS 23 56 201 bekannt.

Die Aufgabe der Erfindung wird darin gesehen, das Walzwerk der eingangs genannten Art derart weiterzuentwickeln, daß eine optimale Herstellung von Granulat erzielt werden kann.

Zur Lösung dieser Aufgabe wird erfindungsgemäß vorgeschlagen, daß das Walzwerk gemäß dem Oberbegriff des Anspruchs 1 entsprechend dem kennzeichnenden Teil dieses Anspruchs ausgebildet ist.

Durch die besondere Anordnung der Rillen wird das Material in schneller Weise zu den beiden Stirnseiten der Walze transportiert. Die Rillen erstrecken sich über die gesamte Breite jeder Walzenhälfte ausgehend von der Walzenmitte bis zu der jeweiligen Stirnseite der Walze. Beim Transport wirken die Stege als Kühlrippen. Da die Breite der Stege kleiner ist als die Breite der Rillen, tritt bei Drehung der Walzen praktisch keine Scherwirkung, sondern nur eine Transportwirkung auf, was das Walzwerk besonders effektiv macht. Somit kann in kurzer Zeit eine große Menge Material über die Rillen nach außen transportiert und zu Granulat mittels der Schneidvorrichtungen verarbeitet werden. Damit wird insgesamt eine optimale Herstellung von Granulat mit dem erfindungsgemäßen Walzwerk ermöglicht.

Das zu verarbeitende Material wird in den Walzenspalt zwischen den beiden Walzen eingefüllt. Damit immer ausreichend Material zur Verarbeitung zur Verfügung steht, sieht eine besondere Ausführungsform der Erfindung vor, daß die Mantelfläche mindestens einer Walze im Bereich der Walzenmitte eine Ausnehmung aufweist. Die Ausnehmung erstreckt sich über den gesamten Umfang der Walze und kann in Richtung der Drehachse der Walze gesehen bogenförmig oder rechteckförmig sein. Die sich von der Walzenmitte zu den Stirnseiten hin erstreckenden Rillen sind zur Drehachse der Walze vorteilhafterweise in einem Winkel bis zu 45° angeordnet. Hierdurch bildet sich zwischen den gegenüberliegenden Rillen der einzelnen Walzenhälften ein Winkel von 180° bis zu 90° aus. Die Breite der Stege liegt zwischen dem 0,5-fachen und etwas kleiner als dem 1-fachen der Breite der Rillen.

Die Erfindung wird nachstehend anhand der Zeichnung näher erläutert. Die Zeichnung zeigt ein Ausführungsbeispiel der Erfindung. Hierbei stellen dar:
Fig.1 eine Seitenansicht,
Fig.2 eine Draufsicht nach Fig.1,
Fig.3 einen abgebrochenen Querschnitt der beiden Walzen mit Walzenspalt nach Fig.1 und
Fig.4 eine abgebrochene Draufsicht einer Walze mit Schneidvorrichtungen nach Fig.1.

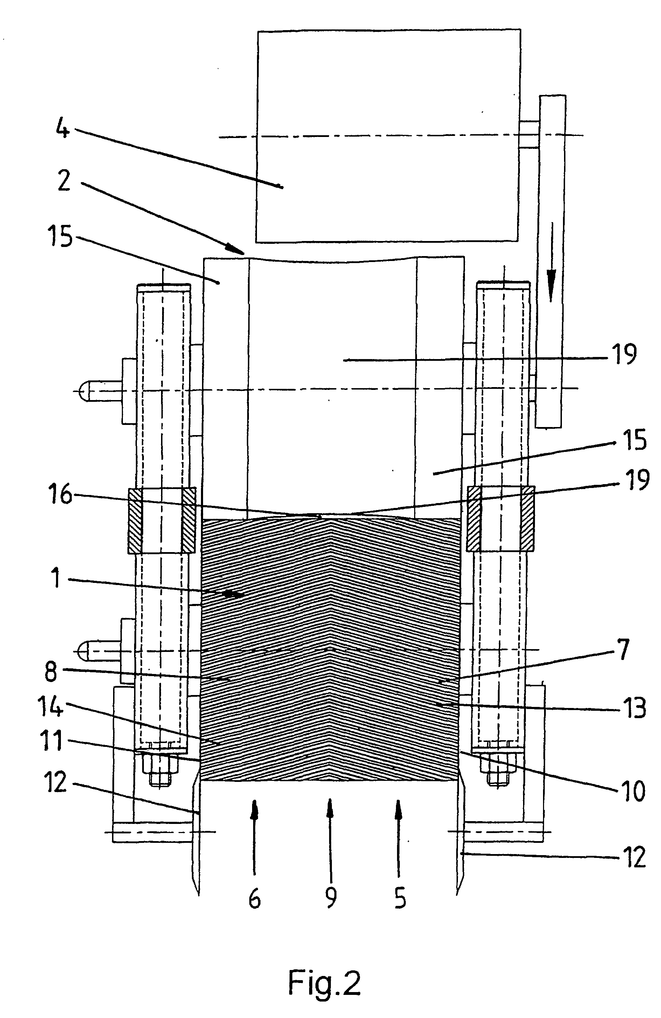

Das erfindungsgemäße Walzwerk weist zwei achsparallel angeordnete und drehbar gelagerte Walzen 1, 2 auf einem Rahmengestell 3 mit einem drehzahlregelbaren Antriebsmotor 4 auf. Der Antrieb der Walze 1 kann von der Walze 2 über ein Zahnradpaar erfolgen, wobei die Walze 1 als sogenannte Arbeitswalze und die Walze 2 als sogenannte Gegenwalze wirkt. Auf der Walzenoberfläche der Walze 1 sind auf einer ersten bzw. rechten Walzenhälfte 5 und auf einer zweiten bzw. linken Walzenhälfte 6 jeweils halbseitig offene Rillen 7, 8 angeordnet. Die Mantelfläche der Walze 2 ist in der Regel glatt ausgebildet. Die Rillen 7 der ersten Walzenhälfte 5 und die Rillen 8 der zweiten Walzenhälfte 6 der Walze 1 treffen sich in einer Walzenmitte 9 unter einem stumpfen Winkel, wobei die Rillen 7, 8, wie in Fig.2 gezeigt, durchgehend von einer ersten Stirnseite 10 der ersten Walzenhälfte 5 bis zu einer zweiten Stirnseite 11 der zweiten Walzenhälfte 6 verlaufen. An jeder Stirnseite 10, 11 der Walze 1 ist eine Schneidvorrichtung 12 in Bereich der offenen Enden der Rillen 7,8 angeordnet. Bei der Schneidvorrichtung 12 handelt es sich um ein drehbares Tellermesser, welches federnd an die Stirnseiten 10, 11 angestellt ist. Die Rillen 7, 8 sind gleichmäßig über den Umfang der Walze 1 verteilt, zwischen 0,5 mm und 10 mm, vorzugsweise zwischen 1 mm und 8 mm breit und zwischen 0,5 mm und 20 mm tief. Die Rillentiefe der Walze 1 entspricht mindestens der Rillenbreite. Sie reicht maximal bis zum dreifachen der Rillenbreite. Die Rillentiefe kann sich von einem Produkteinlauf von der Walzenmitte 9 her bis zu einem Produktauslauf an den beiden Stirnseiten 10, 11 der Walze 1 bis auf den 2-fachen Ausgangswert vergrößern. So kann bei einem Ausführungsbeispiel einer Walze mit 200 mm Durchmesser die Rillentiefe 2 mm im Bereich der Walzenmitte 9 und 4 mm am Walzenrand betragen. Zwischen den Rillen 7, 8 sind parallel zu den Rillen verlaufende metallische Stege 13, 14 angeordnet. Die Breite der Stege 13, 14 ist kleiner als die Breite der Rillen 7, 8. Vorzugsweise liegt die Breite der Stege 13, 14 zwischen dem 0,5-fachen und kleiner als dem 1-fachen der Breite der Rillen. Jede Rille 7,8 kann beispielsweise 3 mm breit und jeder Steg 13, 14 kann 2 mm breit sein. Die Rillenform wird durch seitlich parallel verlaufende Seitenwände gebildet und geht im Rillengrund in eine Halbrundform über. Eine schwalbenschwanzförmige Verbreiterung der Rille bis zum Rillengrund ist vorteilhaft. Damit sich das Material in den Rillen verhakt, kann der Querschnitt der Rillenform auch V-förmig oder von einer sonstigen, dem Materialtransport dienlichen Form sein.

Die Rillen 7, 8 sind schräg angeordnet und stehen in einem Winkel von 20° zur Drehachse der Walze 1 bzw. in einem entsprechenden Winkel von 70° zur Achse der Walzenmitte 9. Der denkbare Winkelbereich für die Rillen 7,8 kann sich von 0° bis zu 45° zur Drehachse bzw. von 90° bis zu 45° zur Achse der Walzenmitte 9 erstrecken.

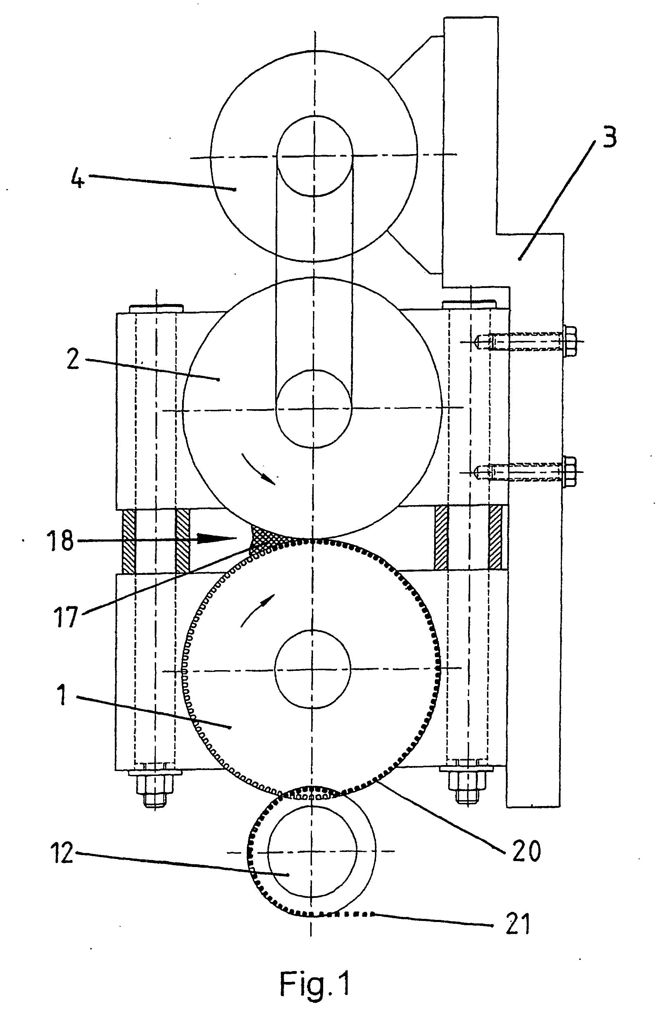

Die Länge der Rillen 7,8, welche bei einem Ausführungsbeispiel in einem Teilbereich der Breite jeder Walzenhälfte 5, 6 naheliegend an den beiden Stirnseiten 10,11 der Walze 1 angeordnet sind, beträgt wenigstens 10 mm und reicht je nach Walzendurchmesser bis zu 150 mm. Dabei entspricht die Länge der Rillen etwa einem Viertel des jeweiligen Walzendurchmessers. Der übrige rillenfreie Bereich der Walze 1 ist glatt ausgebildet. Bei dem gezeigten Ausführungsbeispiel gemäß Fig.1 verlaufen die Rillen 7,8 von der Walzenmitte 9 über die gesamte Breite jeder Walzenhälfte 5, 6 zu den jeweiligen Stirnseiten 10,11.

Die Walze 1 hat über die gesamte Länge eine zylindrische Oberfläche, die Walze 2 hat eine besondere Oberflächenkontur oder Ausnehmung 19. Von den beiden Enden der Walze 2 ausgehend erstreckt sich jeweils eine zylindrischer Bereich 15 gegenüber den auf der Walze 1 befindlichen halboffenen Rillen 7, 8. Dieser zylindrische Bereich 15 der Oberflächenkontur der Walze 2 bildet mit den metallischen Stegen 13, 14 der Walze 1 einen Walzenspalt 16 nahe Null zwischen den Walzen 1 und 2 und verschließt beim Spaltdurchgang die halboffenen Rillen 7, 8. Der zylindrische Bereich 15 der Walze 2 ist je nach Walzendurchmesser 10 mm bis 150 mm lang. Im Ausführungsbeispiel von 200 mm Walzendurchmesser ist der zylindrische Bereich 15 etwa 50 mm lang.

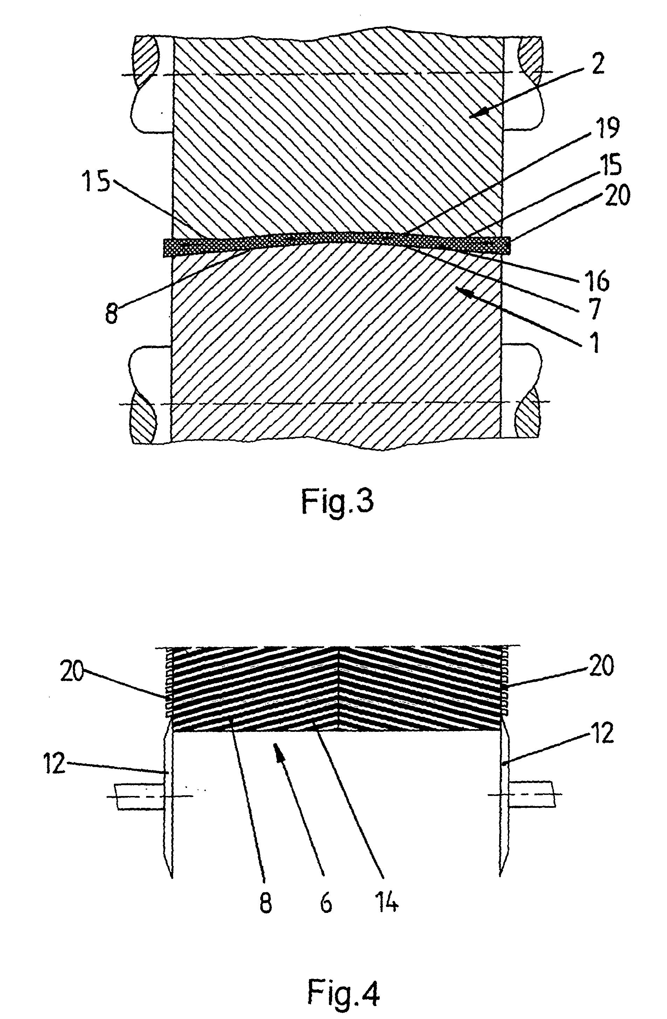

In Fig.3 ist schematisch ein Schnittbild des von den Walzen 1 und 2 gebildeten Walzenspaltes 16 im Bereich der Rillen 7, 8 dargestellt. Ein Produkt 17 wird dem Walzenspalt 16 über eine äußere Füllöffnung 18 zugeführt. Dem zylindrischen Bereich 15 der Oberflächenkontur der Walze 2 folgt in Richtung zur Walzenmitte 9 ein sich kegelförmiger verkleinernder Durchmesser oder Ausnehmung 19 der Walze 2, so daß sich in diesem Bereich eine Vergrößerung des Walzenspaltes 16 von nahe Null auf eine vorbestimmten Wert zwischen 1 mm und maximal etwa 20 mm, vorzugsweise zwischen 2 mm und 5 mm in der Walzenmitte 9 einstellt. Die Oberflächenkontur oder Ausnehmung 19 im Bereich der Walzenmitte 9 kann wie in Fig.2 dargestellt bogenförmig, aber auch rechteckig oder dachförmig oder von einer sonstigen beliebigen Form sein. Dieser Übergangsbereich zwischen den beiden zylindrischen Bereichen 15 der Oberflächenkontur dient dem Abfließen des Produkts oder plastischen Materials 17 von der Walzenmitte 9 in die Rillen 7, 8. Weiterhin ermöglicht der im Mittelbereich der Walze 2 befindliche größere Walzenspalt 16 den Aufbau und die Stabilisierung einer Materialüberdeckung des dort von außen zuströmenden plastifizierten Produkts 17 auf die Walze 1.

Bei einem Ausführungsbeispiel mit einer Walzenlänge von 200 mm, einem Walzendurchmesser von 200 mm und einem Winkel der Rillen 7,8 von 20° zur Drehachse beträgt die Länge der Rillen 7,8 je Walzenhälfte 5, 6 etwa 105 mm und die Länge des zylindrischen Abschnittes 15 der Walze 2 je Walzenhälfte etwa 50 mm. Über die Gesamtlänge der Rillen 7,8 steigt die Rillentiefe von ca. 2 mm in der Walzenmitte 9 nach beiden Stirnseiten 10,11 hin auf ca. 4 mm an.

Bei Betrieb des erfindungsgemäßen Walzwerkes werden durch den im Walzenspalt 16 entstehenden Walzenspaltdruck die in den beiden Walzenhälften 5, 6 der Walze 1 angeordneten Rillen 7, 8 mit plastischem Material gefüllt. Durch die gegenläufige Drehung der Walzen 1, 2 wird bei jedem Spaltdurchgang die Überschußmenge an Material 17 aus den Öffnungen der Rillen 7, 8 an den beiden Stirnseiten 10, 11 als kurze Strangabschnitte 20 herausgepreßt. Diese Strangabschnitte 20 werden von den beiden rotierenden Tellermessern 12 abgeschnitten und als Granulatkörner 21 fortgeschleudert. Die Granulatkörner 21 fallen auf ein Rüttelsieb oder auf eine Wirbelbett, vermischen sich mit bereits erkalteten Granulatkörnern, um danach im erstarrten Zustand in den entsprechenden Vorratsbehältern gelagert zu werden. Die Form der halboffenen Rillen 7, 8 bestimmt die äußere Form des Granulatkorns 21, die Länge des herausgepreßten Stranges 20 ergibt seine Höhe. Die Länge des Granulatkorns 21 ist bei konstantem Zustrom des plastifizierten Materials über die Walzendrehzahl einstellbar. Hierbei ergeben niedere Drehzahlen längere, höhere Drehzahlen kürzere Strangabschnitte 20. Der Drehzahlbereich für das erfindungsgemäße Walzwerk ist zwischen 5 und 500 U/min regelbar.

Das von der Walzenmitte 9 der Walze 1 kommende plastifizierte Produkt 17 muß vor dem Eintritt in die Rillen 7, 8 so temperiert werden, daß sich auf der Walze 1 eine zähplastische Materialschicht bildet, welche zwar noch verformbar, aber schnittfest ist. Die Granulatkörner dürfen nach dem Schneidevorgang nicht sofort wieder zusammenkleben. Eine intensive Temperierung der beiden Walzenoberflächen von innen und/oder von außen dient deshalb einer Feinanpassung der Produktviskosität im Bereich der Schnittfestigkeit des Materials. Bei größeren Durchsatzmengen kann für die exakte Temperierung der Produktschicht eine längere Verweilzeit auf der Walze oder ein größerer Walzendurchmesser erforderlich sein. Die Walzenlänge beträgt entsprechend je nach Anwendungsfall das 0,5-fache bis 8-fache des Walzendurchmessers. Bei längeren Walzen mit mehr als dem 1,5-fachen Walzendurchmesser wird der Materialtransport durch die Anordnung von flachen, spiegelbildlich gegenläufigen Rillen auf der Oberfläche der Walze 2 verbessert. Die Rillen der Walze 2 sind gegenüber den Rillen der Walze 1 spiegelbildlich zur Spaltachse des Walzenspaltes 16 angeordnet. Diese zusätzlichen Rillen auf der Walze 2 weisen den gleichen Winkel zur Drehachse, die gleiche Stegbreite und die gleiche Rillenbreite wie die Rillen 7,8 auf der Walze 1 auf, nur ihre Tiefe beträgt nur etwa ein Drittel im Vergleich zu der Rillentiefe bei der Walze 1. Bei exaktem Gleichlauf beider Walzen 1,2 bilden die Kontur der Rillen 7,8 in der Walze 1 und die Kontur der Rillen in der Walze 2 gemeinsam die Kontur des Granulatkorns 21.

Durch die besondere gegenläufige Anordnung der Rillen 7,8 auf den beiden Walzenhälften 5,6 sowie der kleineren Breite der Stege 13,14 gegenüber der Breite der Rillen 7,8 wird ein effektiver und schneller Transport des zu verarbeitenden Materials 17 zu den Schneidvorrichtungen 12 ermöglicht, an welchen der Materialstrang 20 zu Granulat 21 zerschnitten wird. Damit ist das erfindungsgemäße Walzwerk in optimaler Weise zur Herstellung von Granulat geeignet.

## Patentansprüche

1. Walzwerk mit zwei gegenläufig getriebenen und temperierten Walzen (1,2) und mit mindestens einer Schneidvorrichtung (12), wobei eine Wabe (1) mit einer ersten Walzenhälfte (5) und einer erster Stirnseite (10), einer zweiten Walzenhälfte (6) und einer zweiter Stirnseite (11), und einer Walzenmitte (9) halbseitig offene Rillen (7, 8) und zwischen den Rillen (7, 8) verbleibende Stege (13, 14) aufweist und die Rillen (7) der ersten Walzenhälfte (5) und die Rillen (8) der zweiten Walzenhälfte (6) unter einem stumpfen Winkel gegenläufig zueinander und symmetrisch zu der Walzenmitte (9) angeordnet sind, wobei die Breite der Stege (13, 14) kleiner ist als die Breite der Rillen (7, 8),
**dadurch gekennzeichnet,**
**daß** die Rillen (7, 8) der Walze (1) durchgehend von der ersten Stirnseite (10) bis zur zweiten Stirnseite (11) verlaufen und an jeder Stirnseite (10, 11) der Walze (1) im Bereich von offenen Enden der Rillen (7,8) eine Schneidvorrichtung (12) vorgesehen ist, und die Mantelfläche der anderen Walze (2) glatt ausgebildet ist.

2. Walzwerk nach Anspruch 1,
**dadurch gekennzeichnet,**
**daß** die Mantelfläche wenigstens einer Walze (2) im Bereich der Walzenmitte (9) eine über den Walzenumfang verlaufende Ausnehmung (19) aufweist.

3. Walzwerk nach einem der Ansprüche 1 und 2,
**dadurch gekennzeichnet,**
**daß** die Rillen (7, 8) in einem Winkel von bis zu 45° zur Drehachse der Walze (1) angeordnet sind.

4. Walzwerk nach einem der vorhergehenden Ansprüche,
**dadurch gekennzeichnet,**
**daß** die Breite der Stege (13, 14) zwischen dem 0,5-fachen und kleiner als dem 1-fachen der Breite der Rillen (7,8) ist.

5. Walzwerk nach einem der vorhergehenden Ansprüche,
**dadurch gekennzeichnet,**
**daß** die Rillen (7, 8) zwischen 0,5 mm und 10 mm breit und zwischen 0,5 mm und 20 mm tief sind, wobei die Rillentiefe mindestens der Rillenbreite entspricht.

6. Walzwerk nach einem der vorhergehenden Ansprüche,
**dadurch gekennzeichnet,**
**daß** sich die Tiefe der Rillen (7, 8) von der Walzenmitte (9) bis zu den Stirnseiten (10, 11) vergrößert.

7. Walzwerk nach einem der vorhergehenden Ansprüche,
**dadurch gekennzeichnet,**
**daß** jede Schneidvorrichtung (12) ein an eine Stirnseite (10, 11) der Walze (1) federnd angestelltes Tellermesser aufweist.

## Claims

1. Rolling mill with two tempered rollers (1, 2) driven in opposition, and with at least one cutting device (12), where a roller (1) with a first roller half (5) and a first end (10), a second roller half (6) and a second end (11) and a roller centre (9), has grooves (7, 8) open on one side and between the grooves (7, 8) residual webs (13, 14), and the grooves (7) of the first roller half (5) and the grooves (8) of the second roller half (6) run towards each other at an obtuse angle and are arranged symmetrical to the roller centre (9), where the width of the webs (13, 14) is less than the width of the grooves (7, 8),
**characterised in that**
the grooves (7, 8) of the roller (1) run through from the first end (10) to the second end (11) and a cutter device (12) is arranged at each end (10, 11) of the roller (1) in the area of the open ends of the grooves (7, 8), and the casing surface of the other roller (2) is formed smooth.

2. Rolling mill according to claim 1, **characterised in that** the casing surface of at least one roller (2) in the area of the roller centre (9) has a recess (19) running over the roller periphery.

3. Rolling mill according to one of claims 1 and 2, **characterised in that** the grooves (7, 8) are arranged at an angle of up to 45° to the rotation axis of the roller (1).

4. Rolling mill according to any of the previous claims, **characterised in that** the width of the webs (13, 14) is between 0.5 times and less than 1 times the width of the grooves (7, 8).

5. Rolling mill according to any of the previous claims, **characterised in that** the grooves (7, 8) are between 0.5 mm and 10 mm wide and between 0.5 mm and 20 mm deep, where the groove depth is at least equal to the groove width.

6. Rolling mill according to any of the previous claims, **characterised in that** the depth of the grooves (7, 8) increases from the roller centre (9) to the ends (10, 11).

7. Rolling mill according to any of the previous claims, **characterised in that** each cutting device (12) has a plate cutter resiliently mounted on one end (10, 11) of the roller (1).

## Revendications

1. Système de laminoir comportant deux cylindres (1, 2) en équilibre thermique, entraînés en sens inverse, et au moins un dispositif de sectionnement (12), sachant qu'un cylindre (1), comprenant une première moitié (5), une première face extrême (10), une seconde moitié (6), une seconde face extrême (11) et un centre (9), présente des rainures semi-ouvertes (7, 8) et des membrures (13, 14) subsistant entre lesdites rainures (7, 8), les rainures (7) de la première moitié (5) du cylindre, et les rainures (8) de la seconde moitié (6) dudit cylindre, étant agencées en sens inverse les unes des autres selon un angle obtus, et symétriquement par rapport au centre (9) du cylindre, la largeur des membrures (13, 14) étant plus petite que la largeur des rainures (7, 8),
**caractérisé par le fait**
**que** les rainures (7, 8) du cylindre (1) s'étendent de manière ininterrompue depuis la première face extrême (10) jusqu'à la seconde face extrême (11); un dispositif de sectionnement (12) est prévu à chaque face extrême (10, 11) du cylindre (1), dans la région d'extrémités ouvertes des rainures (7, 8); et la surface de l'enveloppe de l'autre cylindre (2) est de réalisation lisse.

2. Système de laminoir selon la revendication 1,
**caractérisé par le fait**
**que** la surface de l'enveloppe d'au moins un cylindre (2) comporte, dans la région du centre (9) dudit cylindre, un évidement (19) s'étendant sur le pourtour dudit cylindre.

3. Système de laminoir selon l'une des revendications 1 et 2,
**caractérisé par le fait**
**que** les rainures (7, 8) sont disposées selon un angle mesurant jusqu'à 45° vis-à-vis de l'axe de rotation du cylindre (1).

4. Système de laminoir selon l'une des revendications précédentes,
**caractérisé par le fait**
**que** la largeur des membrures (13, 14) est comprise entre 0,5 fois et moins de 1 fois la largeur des rainures (7, 8).

5. Système de laminoir selon l'une des revendications précédentes,
**caractérisé par le fait**
**que** les rainures (7, 8) présentent une largeur de 0,5 mm à 10 mm et une profondeur de 0,5 mm à 20 mm, la profondeur desdites rainures correspondant au moins à la largeur desdites rainures.

6. Système de laminoir selon l'une des revendications précédentes,
**caractérisé par le fait**
**que** la profondeur des rainures (7, 8) augmente depuis le centre (9) du cylindre jusqu'aux faces extrêmes (10, 11).

7. Système de laminoir selon l'une des revendications précédentes,
**caractérisé par le fait**
**que** chaque dispositif de sectionnement (12) possède une lame discoïdale engagée élastiquement contre une face extrême (10, 11) du cylindre (1).
